# EUROPÄISCHE PATENTSCHRIFT

(11) **EP 0 552 815 B1**
(45) Veröffentlichungstag und Bekanntmachung des Hinweises auf die Patenterteilung: **06.03.1996**
(21) Anmeldenummer: 93103546.3
(22) Anmeldetag: 05.10.1988
(51) Int. Cl.: F16F 15/02, F16F 9/02, F15B 15/28

(54) **Pneumatischer Stossdämpfer**
Pneumatic shock absorber
Amortisseur de chocs pneumatique

(30) Priorität: 01.12.1987 DE 3740669
(43) Veröffentlichungstag der Anmeldung: 28.07.1993
(62) Teilanmeldung aus: 88116422.2
(73) Patentinhaber: Festo KG, D-73734 Esslingen (DE)
(72) Erfinder: Stoll, Kurt, W-7300 Esslingen (DE); Halama, Herbert, W-7314 Wernau (DE)
(74) Vertreter: Abel, Martin, Dipl.-Ing.

(56) Entgegenhaltungen:
- BE-A- 494 915
- DE-A- 3 246 731
- DE-U- 8 704 728
- FR-A- 2 377 021
- FR-A- 2 552 172
- GB-A- 2 090 940
- US-A- 1 544 850
- US-A- 2 154 489
- US-A- 4 588 953
- PATENT ABSTRACTS OF JAPAN vol. 7, no. 187 (M-236)(1332) 16. August 1983 & JP-A-58 088 241 (SHOWA DENSEN DENRAN K.K.)
- PATENT ABSTRACTS OF JAPAN vol. 7, no. 261 (M-257)(1406) 19. November 1983 & JP-A-58 142 049 (HITACHI SEISAKUSHO K.K.)
- MACHINE DESIGN 12. Juli 1984, Seiten 97 - 99 PAYNE D.D. 'SENSING THE POSITION OF PNEUMATIC CYLINDERS'

## Beschreibung

Die Erfindung betrifft einen pneumatischen Stoßdämpfer nach der Gattung des Anspruchs 1.

Die Steigerung der Produktivität einer Maschine geht oft parallel mit der Steigerung der Geschwindigkeit der eingesetzten Antriebe. Selbst pneumatische Antriebe erreichen heute Geschwindigkeiten von 3 m/s und mehr. Um harte Schläge, Lärm oder Erschütterungen in erträglichen Grenzen zu halten, werden neben den seit langem bekannten Methoden zur Energieumwandlung in den Endlagen durch pneumatische Endlagendämpfung oder durch hydraulische Stoßdämpfer in neuerer Zeit auch pneumatische Stoßdämpfer eingesetzt, und zwar vor allem dort, wo aus geometrischen Gründen eine pneumatische Dämpfung nicht im pneumatischen Linearantrieb integriert werden kann. Die Vorteile des pneumatischen Stoßdämpfers liegen vor allem in seinem geringeren Gewicht, in seiner Verwendbarkeit für höhere Frequenzen und in seiner weitgehenden Unempfindlichkeit gegen eine Erhöhung der Betriebstemperatur. Darüberhinaus kann ein weicherer Dämpfungsbeginn erzielt werden. Im Gegensatz zum hydraulischen Stoßdämpfer kann er vor allem auch unbedenklich in der Lebensmittelindustrie und Medizin-Technik eingesetzt werden, da er keine Verschmutzung verursacht. Die Energieumwandlung pro Zeiteinheit ist wesentlich höher gegenüber dem hydraulischen Stoßdämpfer.

Ein aus der DE-A-27 30 860 bekannter pneumatischer Stoßdämpfer weist neben einem einlaßseitigen Rückschlagventil ein auslaßseitiges, einstellbares Überdruckventil auf. Dies ist zum Teil deshalb erforderlich, um die bei einem Stoß im Druckraum komprimierte Luft herauszulassen, wodurch ein Zurückfedern vom Endanschlag verhindert werden soll, und weiterhin wird mit diesem Überdruckventil ein Druckluftverlust der über das Rückschlagventil einströmenden Druckluft im unbelasteten Zustand verhindert. Zur Anpassung an verschiedene Stoßenergien bzw. zu dämpfende Massen kann der Vordruck im Druckraum eingestellt werden. Da das Auslaßventil stets bei einem bestimmten, eingestellten Druckwert öffnet, erfolgt dieses Öffnen bei einem höheren Vordruck wesentlich früher, als bei einem geringeren Vordruck. Der Dämpfungsverlauf hängt somit in unerwünschter Weise sehr stark vom eingestellten Vordruck ab. Selbstverständlich kann mittels der Einstellschraube in der Kolbenstange der öffnungsdruckwert des Auslaßventils eingestellt bzw. nachjustiert werden. Bei sich häufig veränderndem Vordruck ist dies jedoch sehr umständlich und aufwendig. Ein weiterer Nachteil besteht darin, daß das Auslaßventil eine sehr starke Ventilfeder benötigt, insbesondere bei sehr hohem Vordruck oder sehr großen zu dämpfenden Massen. Dies führt dazu, daß auf den Kolben im eingefahrenen Zustand immer noch ein sehr hoher Restdruck einwirkt, der bestehen bleibt, nachdem sich das Auslaßventil wieder geschlossen hat.

Ein ähnlicher Stoßdämpfer der eingangs genannten Gattung, der noch zusätzlich eine über einen Druckregler mit dem Druckraum verbundene externe Druckquelle besitzt, ist aus der FR-A-2552172 bekannt. Dieser bekannte Stoßdämpfer weist ebenfalls die zur DE-A-27 30 860 genannten Nachteile auf.

Die Aufgabe der Erfindung liegt daher darin, einen pneumatischen Stoßdämpfer der eingangs genannten Gattung zu schaffen, der auch ohne manuelles Einstellen des Vordrucks im wesentlichen gleichbleibende Dämpfungseigenschaften aufweist, d.h., bei dem die Stoßdämpfereigenschaften automatisch optimiert werden.

Diese Aufgabe wird erfindungsgemäß durch die Merkmale des Anspruchs 1 gelöst.

Auf diese Weise kann bei jedem Dämpfungsvorgang automatisch geprüft werden, ob der Vordruck zu hoch oder zu niedrig ist und daraufhin wird über den Druckregelkreis automatisch eine entsprechende Korrektur vorgenommen. Sowohl eine manuelle Ersteinstellung, wie auch eine Nachstellung bei sich verändernden Verhältnissen kann dadurch entfallen. Das Dämpfungsverhalten wird immer automatisch auf ein Optimum eingestellt bzw. nachgestellt, so daß der Einsatz insbesondere für Anwendungen mit variabler Aufprallenergie besonders günstig ist. Die Vorteile einer derartigen automatischen Druckregelung ergeben sich bei allen Stoßdämpfern, bei denen der Druckraum zur Festlegung der Dämpfungseigenschaften mit einem Vordruck beaufschlagt ist. Durch die elektronische Regelvorrichtung erhöht sich der vom Druckregler vorgegebene Druck beim Abprallen des Kolbens von der bei minimalem Druckraumvolumen auftretenden zweiten Anschlagstellung und verringert sich bei Nichterreichen dieser zweiten Anschlagstellung.

Die nachfolgenden Unteransprüche beinhalten vorteilhafte Weiterbildungen des im Anspruch 1 angegebenen Gegenstandes.

Eine noch feinere Einstellung der optimalen Dämpfungseigenschaften kann dadurch erreicht werden, daß der mit der Regelvorrichtung verbundene Sensor zur Erkennung des Erreichens der zweiten Anschlagstellung sowie wenigstens einer weiteren, vor dieser liegenden Stellung ausgebildet ist, wobei bei Nichterreichen beider Stellungen eine größere Druckverringerung und bei Nichterreichen nur der zweiten Anschlagstellung eine kleinere Druckverringerung auslösbar ist. Eine weitere Verfeinerung wird dadurch erreicht, daß bei einer unter einem vorgebbaren Grenzwert liegenden Annäherungsgeschwindigkeit an die zweite Anschlagstellung der Druck des Druckreglers verringert wird. Vor allem die Kombination dieser Maßnahmen führt zu der angestrebten weiteren Verfeinerung, indem bei jeweils einmaligem Erreichen der beiden Stellungen und Unterschreitung des vorgebbaren Grenzwerts eine noch kleine Druckverringerung auslösbar ist.

Auch die Nachregelung bei zu geringem Druck kann dadurch verfeinert werden, daß bei Überschreitung einer vorgebbaren Zahl von das Erreichen der zweiten Anschlagstellung kennzeichnenden Sensorsignalen eine Druckerhöhung auslösbar ist und/oder daß bei einmaligem Erreichen der zweiten Anschlagstellung und zweimaligem Erreichen einer weiteren, vor dieser liegenden Stellung ebenfalls eine Druckerhöhung auslösbar ist. Auch diese Maßnahmen können zur Erreichung einer noch exakteren Einstellung kombiniert werden, indem die Druckerhöhungen in diesen Fällen unterschiedlich abgestuft sind, insbesondere indem im ersten Falle eine geringere und zweiten Falle eine höhere Druckerhöhung eingeregelt wird. Auf diese Weise lassen sich Schwingungen in der Endlage mit Erfolg verhindern.

Zweckmäßigerweise wird durch den Sensor oder einen weiteren Sensor noch eine die Dämpfungsbewegung des Kolbens erfassende, außerhalb des Bereichs eines möglichen Zurückprallens des Kolbens von der zweiten Anschlagstellung liegende Stellung zusätzlich erfasst, wobei ein beim Passieren dieser Stellung ausgelöstes Sensorsignal eine notwendige Bedingung für einen Druckregelvorgang darstellen kann. Dieses Sensorsignal dient auch vorzugsweise zur Auslösung des Starts eines Regelprogramms in der als Mikrorechner ausgebildeten elektronischen Steuervorrichtung.

Ausführungsbeispiele der Erfindung sind in der Zeichnung dargestellt und in der nachfolgenden Beschreibung näher erläutert. Es zeigen:
- Fig. 1: einen Stoßdämpfer im Längsschnitt zur Verwendung mit einem elektronischen Druckregelkreis gemäß Fig. 2,
- Fig. 2: einen schematisch dargestellten Stoßdämpfer in Verbindung mit einem Druckregelkreis für den Vordruck des Druckraumes,
- Fig. 3: typische, den Bewegungsablauf des Kolbens darstellende Kennlinien bei unterschiedlichem Vordruck und
- Fig. 4: ein Flußdiagramm zur Erläuterung der Wirkungsweise des Druckregelkreises.

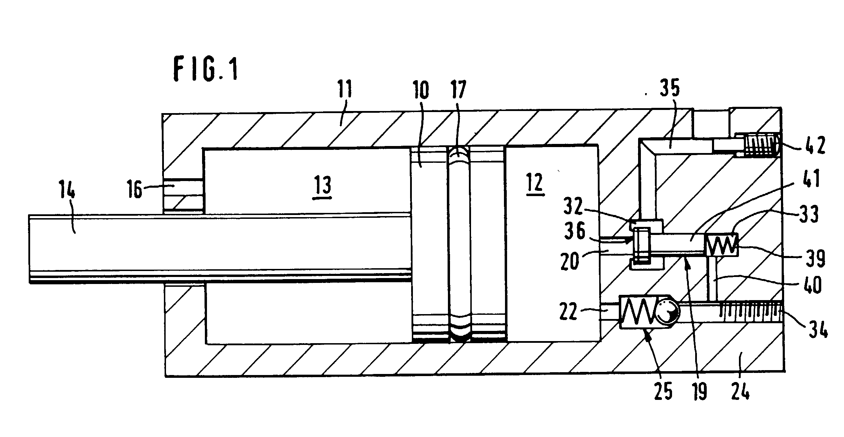

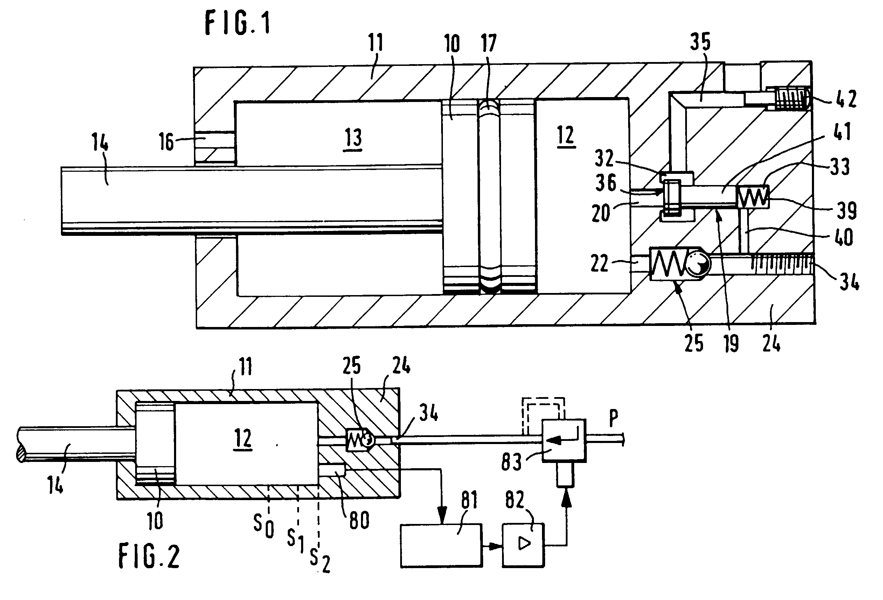

Bei dem in Fig. 1 dargestellten pneumatischen Stoßdämpfer ist ein Kolben 10 in einem Zylinder 11 verschiebbar angeordnet. Der Innenraum des Zylinders 11 wird durch den Kolben 10 in einen Druckraum 12 und in einen zweiten Zylinderraum 13 unterteilt. Eine mit dem Kolben 10 verbundene Kolbenstange 14 erstreckt sich durch die gemäß der Darstellung linke Stirnwandung des Zylinders 11. Der zweite Zylinderraum 13 ist über einen Druckausgleichskanal 16 in der linken Stirnwandung mit dem Außendruck beaufschlagt, so daß dort weder ein Unterdruck, noch ein Überdruck entstehen kann. In die Umfangsfläche des Kolbens 10 ist ein den Kolben abdichtender 0-Ring 17 eingelassen. An der den Druckraum 12 begrenzenden Stirnfläche des Kolbens 10 mündet ein zu einem Auslaßventil 19 führender Kanal 20 sowie ein zu einem Rückschlagventil 25 führender Kanal 22.

Das in einer rechten Stirnwandung 24 eingelassene Rückschlagventil 25 besteht im wesentlichen aus einem von einer Feder beaufschlagten, kugelförmigen Ventilglied, das gegen einen Ventilsitz in der Anlage gehalten wird. Selbstverständlich sind noch andere bekannte Ausführungen von Rückschlagventilen einsetzbar.

Das Rückschlagventil 25 ist über einen sich nach außen erstreckenden Anschluß 34 in nicht dargestellter Weise mit einer Druckquelle verbindbar, wobei zur Einstellung des Druckes ein Druckregler vorgesehen ist, der später noch ausführlich erläutert wird.

Das ebenfalls in der rechten Stirnwandung 24 angeordnete Auslaßventil 19 besteht im wesentlichen aus einem in einer zylinderartigen Ventilkammer verschiebbaren Ventilkolben 41. Die Ventilkammer ist in zwei gegeneinander abgedichtete Teilkammern 32, 33 unterteilt. Die erste Teilkammer 32 auf der linken Seite des Ventilkolbens 30 ist zum einen über den Kanal 20 mit dem Druckraum 12 und zum anderen über einen Auslaßkanal 35 mit der den Zylinder 11 umgebenden Atmosphäre verbunden. Die Mündungskante des in die erste Teilkammer 32 mündenden Kanals 20 ist als Ventilsitz 36 ausgebildet, wobei der Ventilkolben 41 an der entsprechenden Gegenfläche mit einer Ringdichtung versehen ist. Diese Ringdichtung kann selbstverständlich auch in die rechte Stirnwandung 24 so eingelassen sein, daß sie die Mündung des Kanals 20 umgreift.

Die zweite Teilkammer 33 des Auslaßventils 19 ist über einen Kanal 40 mit dem Anschluß 34, also direkt mit der Druckquelle, verbunden. Die Druckangriffsfläche in der zweiten Teilkammer 33 auf den Ventilkolben 41 entspricht im wesentlichen derjenigen Fläche des Ventilkolbens auf der gegenüberliegenden Seite, durch die der Ventilsitz 36 abgedeckt wird. Im Auslaßkanal 35 ist eine einstellbare Drossel 42 angeordnet, durch die beispielsweise in Abhängigkeit von Spindelumdrehungen ein Rechteckquerschnitt mehr oder weniger freigegeben wird.

Im Grundzustand liegt der Kolben 10 an der linken Stirnwandung des Zylinders 11 an, befindet sich also in seiner ersten Anschlagstellung und wird dort durch den Vordruck im Druckraum 12 gehalten, der vom Anschluß 34 her über das Rückschlagventil 25 zugeführt wird. Der Ventilkolben 41 befindet sich in der gezeichneten Stellung, in der er zum einen durch die Kraft einer in der zweiten Ventilkammer 33 angeordneten Feder 39 gehalten wird und zum anderen durch den Vordruck in der zweiten Teilkammer 33, der über den Kanal 40 zugeführt wird.

Da auf den Ventilkolben 41 zunächst von beiden Seiten her über gleiche Flächen der Vordruck einwirkt, erfolgt eine Druckkompensation, so daß dieser Ventilkolben 41 ausschließlich durch die Kraft der Ventilfeder 39 gegen den Ventilsitz 36 gedrückt wird.

Wird nun ein zu dämpfender Stoß über die Kolbenstange 14 auf den Kolben 10 übertragen, so bewegt sich dieser unter Verringerung und Komprimierung des Druckraumvolumens von der linken ersten Anschlagstellung weg. Das Auslaßventil 19 bleibt zunächst geschlossen, da in der zweiten Teilkammer 33 weiterhin der Vordruck vorliegt, während der Druck an der gegenüberliegenden Fläche durch den Kompressionshub des Kolbens 10 ansteigt. In Abhängigkeit der Federkraft der Ventilfeder 39 erfolgt ab einem bestimmten Druckwert ein Öffnen des Auslaßventils 19, das z.B. bei geringer Federkraft der Ventilfeder 39 sehr rasch erfolgt. Während des restlichen Kompressionshubs kann der Kompressionsdruck über die Drossel 42 mehr oder weniger schnell entweichen, so daß durch diese Drossel 42 das Dämpfungsverhalten maßgeblich beeinflußbar ist. Bei geringer Federkraft der Ventilfeder 39 bestimmt die Drossel 42 nahezu über den gesamten Kompressionshub die Dämpfung, die dadurch sehr gleichmäßig und kontinuierlich ist.

Erreicht der Kolben 10 die zweite Anschlagstellung, so wird das Auslaßventil 19 durch die Kraft der Feder 39 wieder geschlossen, da nun wieder an den beiden gegenüberliegenden, wirksamen Stirnflächen des Ventilkolbens 41 derselbe Vordruck vorliegt.

Entfällt die Haltekraft, so wird der Kolben 10 durch das über das Rückschlagventil 25 einströmende Druckmittel in die erste Anschlagstellung zurückgefahren, während das Auslaßventil 19 geschlossen bleibt. Ein Ausströmen dieses Druckmittels ist daher in keiner der beiden Anschlagstellungen zu befürchten.

In Abwandlung des in Fig. 1 dargestellten Ausführungsbeispiels kann der Ventilkolben 41 mit einem in den Druckraum 12 hineinreichenden Stößel versehen werden, so daß beim Erreichen der zweiten Anschlagstellung das Auslaßventil 19 durch den Kolben 10 zwangsweise geöffnet wird, selbst wenn der Druckanstieg im Druckraum 12 hierfür nicht ausreichen würde. Eine derartige Ausführung bietet sich dann an, wenn die Ventilfeder 39 eine große Federkraft aufweist und das Auslaßventil 19 sehr spät geöffnet werden soll.

Fig. 2 zeigt den schematisch dargestellten Zylinder 11 in Verbindung mit einem Druckregelkreis. Dieser Druckregelkreis kann jedoch auch für andere pneumatische Stoßdämpfer eingesetzt werden, bei denen der Druckraum über ein Rückschlagventil mit einem Vordruck beaufschlagt wird. Erforderliche, die Dämpfungseigenschaften mit bestimmende Auslaßkanäle können gemäß einer der bekannten Anordnungen ausgebildet sein.

Im Bereich der zweiten Anschlagstellung, gemäß der Darstellung in der rechten Stirnwand 24 ist ein Sensor 80 zur vorzugsweise berührungslosen Erfassung der Kolbenbewegung im Bereich der zweiten Anschlagstellung vorgesehen. Dieser Sensor kann beispielsweis als kapazitiver oder induktiver Näherungsgeber ausgebildet sein, wobei verschiedene Positionen durch unterschiedliche Signale erkennbar sind. Selbstverständlich können zur Erkennung mehrerer Positionen auch mehrere derartiger Sensoren vorgesehen sein. Die Geschwindigkeit des Kolbens kann dabei durch die Auswertung der Sensorsignaländerung zusätzlich erfasst werden.

Die Signale des Sensors 80 werden einem Druckregelkreis zugeführt, der aus einer elektronischen Regelvorrichtung 81 besteht, die vorzugsweise als Mikrorechner ausgebildet ist, und deren Ausgang über einen Verstärker 82 einen Druckregler 83 steuert. Dieser Druckregler 83 ist vorzugsweise als Druckregelventil, insbesondere als Druckproportionalventil ausgebildet. Eine Druckquelle P ist über den Druckregler 83 mit dem Anschluß 34 verbunden.

Durch den Druckregelkreis kann der Vordruck im Druckraum 12 optimal eingestellt werden, wobei eine automatische Anpassung bei sich ändernder Stoßbelastung der zu dämpfenden Vorrichtung erfolgt. Dies geschieht prinzipiell dadurch, daß man einen optimalen Dämpfungszustand dann annimmt, wenn der Kolben infolge eines zu dämpfenden Stoßes die zweite Anschlagstellung zügig, jedoch weich erreicht, ohne zurückzuprallen. Prallt er zurück ist der Vordruck zu gering und muß erhöht werden, erreicht er die Anschlagstellung jedoch nicht oder zu langsam, so ist der Vordruck zu hoch und muß reduziert werden.

Der Druckregelkreis kann beispielsweise als kompakte Einheit am Stoßdämpfer angeordnet sein und benötigt lediglich eine Stromversorgung und einen Druckluftanschluß.

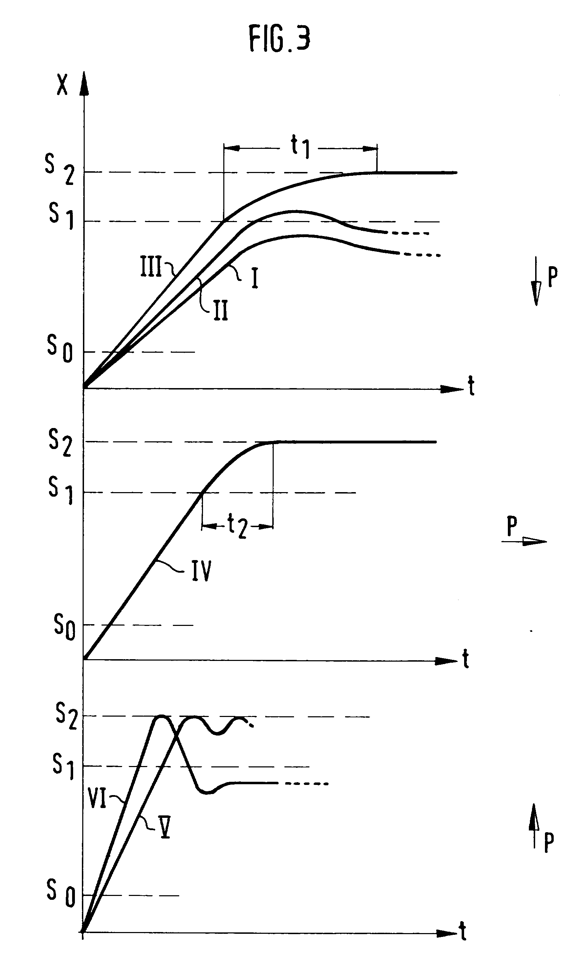

Zur fein abgestuften Druckregelung werden die in Fig. 3 dargestellten Fälle I - VI von unterschiedlichen Bewegungsabläufen des Kolbens 10 unterschieden. Hierzu werden vom Sensor 80 oder zusätzlich durch einen weiteren Sensor 3 Positionen S0, S1 und S2 im Bereich der zweiten Anschlagstellung erfasst. Die Position S0 ist von dieser Anschlagstellung so weit entfernt, daß ein Zurückprallen des Kolbens über diese Stellung hinaus nicht zu erwarten ist, so daß ein gleich bezeichnetes Sensorsignal S0 als Kriterium für eine Kolbenbewegung dienen kann, die den Druckregelkreis aktiviert, bzw. ein Programm des Mikroprozessors in der Regelvorrichtung 81 anlaufen läßt. Die Position S1 liegt nahe der Anschlagstellung S2 und kann bei einem Zurückprallen des Kolbens von der Anschlagstellung einmal oder mehrmal überschritten werden.

Durch die Kurve I ist der Fall eines viel zu hohen Vordruckes dargestellt, d.h., es wird zwar ein Signal S0, jedoch weder ein Signal S1 noch ein Signal S2 erzeugt. Der viel zu hohe Vordruck muß sehr stark abgesenkt werden.

Die Kurve II stellt den Fall dar, daß nach Erzeugung eines Signals S0 zwar die Position S1 einmal oder mehrfach überfahren wird, daß jedoch die Anschlagstellung S2 nicht erreicht wird. Der Vordruck ist immer noch deutlich zu hoch und muß abgesenkt werden.

Die Kurve III stellt den Fall dar, daß sämtliche Positionen einmal erreicht werden, daß also der Kolben ohne abzuprallen sanft gegen die zweite Anschlagstellung geführt wird. Allerdings ist die Zeitspanne t1 zwischen den Positionen S1 und S2 sehr groß, die Geschwindigkeit also sehr gering. Da diese Zeitspanne t1 über einer maximal zulässigen Zeitspanne Tₘₐₓ liegt, ist der Vordruck immer noch geringfügig zu hoch und muß um einen kleinen Betrag abgesenkt werden.

Die Kurve IV stellt den idealen Bewegungsablauf des Kolbens 10 dar, d.h. es wird jeweils ein Signal S0, S1 und S2 erzeugt - wie bei der Kurve III -, jedoch liegt die auftretende Zeitspanne T2 zwischen den Positionen S1 und S2 unterhalb einer höchst zulässigen Zeitspanne Tₘₐₓ und über einer minimal erforderlichen Zeitspanne Tₘᵢₙ. Der Vordruck braucht nicht verändert zu werden.

Der Kurvenverlauf V stellt den Fall eines zu geringen Vordrucks dar, d.h. es wird jeweils ein Signal S0 und S1 erzeugt, jedoch mehrere Signale S2, d.h. der Kolben prallt von der zweiten Anschlagstellung aufgrund einer zu hohen Auftreffgeschwindigkeit einmal oder mehrmals ab. Der Vordruck muß angehoben werden.

Schließlich zeigt der Kurvenverlauf VI den Fall eines viel zu geringen Vordrucks, d.h. der Kolben wird mit so großer Geschwindigkeit gegen die zweite Anschlagstellung geführt, daß die Zurückprallbewegung über die Position S1 hinausgeht. D.h., es wird ein Signal S0 und ein Signal S2 erzeugt, jedoch mehrere Signale S1.

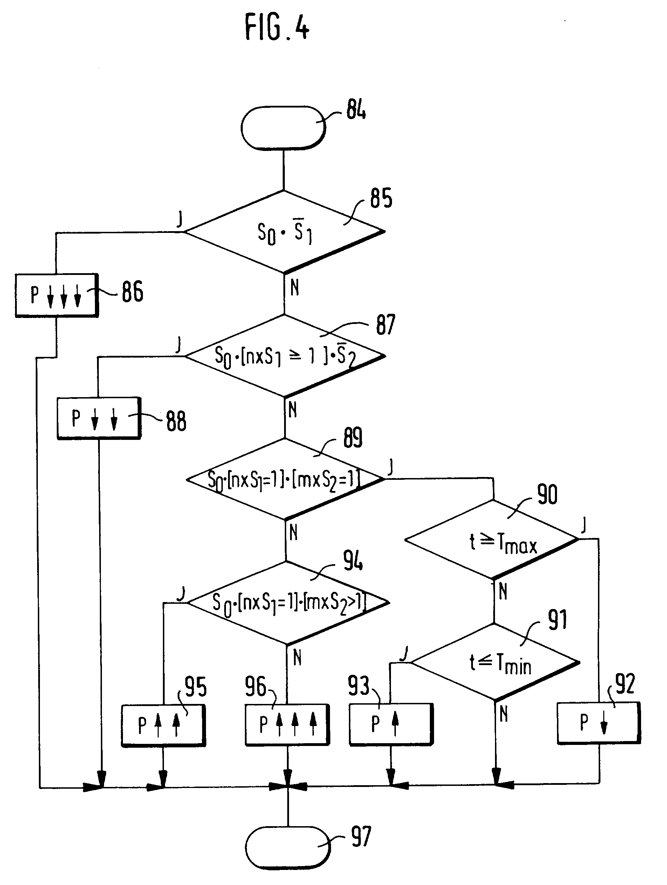

In Fig. 4 ist ein Flußdiagramm zur Erläuterung der Wirkungsweise des Druckregelkreises, bzw. der elektronischen Regelvorrichtung 81 dargestellt. Dabei bedeuten Punkte zwischen Signalen und -Verknüpfungen dieser Signale, während ein Querstrich über einem Signal eine negierende Bedeutung hat, d.h. dieses Signal soll nicht vorliegen.

Nach einem Programmstart 84, der z.B. durch ein Signal S0 oder durch das Einschalten der Versorgungsspannung ausgelöst wird, wird zunächst in einem Prüfschritt 85 geprüft, ob die Verhältnisse der Kurve I vorliegen, also ob nach einem Signal S0 innerhalb einer vorgebbaren Zeitspanne kein Signal S1 auftritt. Ist dies der Fall, so wird in einem Druckreduziervorgang 86 der Vordruck über den Druckregler 83 sehr stark abgesenkt, was sich selbstverständlich erst beim darauffolgenden Dämpfungsvorgang auswirken kann.

Liegt diese Bedingung nicht vor, so wird in einem Prüfschritt 87 geprüft, ob die Verhältnisse der Kurve II vorliegen, also ob ein Signal S0, wenigstens ein Signal S1, jedoch kein Signal S2 erzeugt wird. Ist dies der Fall, so wird in einem Druckreduziervorgang 88 der Vordruck deutlich, jedoch nicht so stark wie beim Vorgang 86 abgesenkt.

Ist auch diese Bedingung nicht erfüllt, so wird im Prüfschritt 89 das Vorliegen der Bedingungen der Kurven III und IV nachgeprüft. Liegen diese Bedingungen vor, so wird noch zusätzlich in den Prüfschritten 90 und 91 geprüft, ob die Zeitspanne t größer oder gleich der maximal zulässigen Zeitspanne Tₘₐₓ oder kleiner oder gleich der Mindestzeitspanne Tₘᵢₙ ist. Im ersten Falle wird im Druckreduziervorgang 92 der Vordruck geringfügig abgesenkt und im zweiten Falle im Druckerhöhungsvorgang 93 der Vordruck geringfügig angehoben. Ist keine der beiden Bedingungen erfüllt, so liegen ideale Verhältnisse vor, und der augenblicklich eingestellte Vordruck wird beibehalten.

Ist die Bedingung des Prüfschritts 89 nicht erfüllt, so wird im Prüfschritt 94 geprüft, ob die durch die Kurve V dargestellten Verhältnisse vorliegen, also ob die Signale S0 und S1 jeweils einmal auftreten, dagegen das Signal S2 wenigstens zweimal erscheint. In diesem Falle wird im Druckerhöhungsvorgang 95 der Vordruck deutlich angehoben. Liegt dagegen die Bedingung des Prüfschritts 94 nicht vor, so können nur noch die durch die Kurve VI dargestellten Verhältnisse vorliegen und der Vordruck wird durch den Druckerhöhungsschritt 96 noch stärker angehoben.

Nach den jeweiligen Vorgängen zur Druckerhöhung oder Druckreduzierung erfolgt das Programmende 97, ist beispielsweise der Programmstart 84 durch das Einschalten der Versorgungsspannung erfolgt, so kann die gesamte Programmfolge auch zyklisch durchlaufen werden.

Selbstverständlich können die Vorgänge zur Veränderung des Vordrucks auch einfacher oder noch feiner unterteilt ausgebildet sein, indem gegenüber der Darstellung in Fig. 4 weniger oder mehr Fallunterscheidungen getroffen werden. Dies kann insbesondere auch durch die Überwachung einer größeren oder geringeren Zahl von Positionen im Bereich der zweiten Anschlagstellung erfolgen. Im einfachsten Fall kann beispielsweise nur das Erreichen der zweiten Anschlagstellung überwacht werden, wobei das Nichterreichen zu einer Druckabsenkung und das Erreichen zu einer Druckerhöhung führt. In diesem Falle erfolgt dann eine Nachregelung des Vordrucks erst nach mehreren Zyklen.

Die dargestellten und beschriebenen pneumatischen Stoßdämpfer können selbstverständlich prinzipiell auch in umgekehrter Richtung dämpfend wirken, also nicht nur beim Hineinstoßen des Kolbens, sondern auch beim Herausziehen desselben. Im zweiten Falle müssen selbstverständlich die beiden Zylinderräume 13 und 12 und die in diesen Zylinderräumen angeordneten Vorrichtungen miteinander vertauscht werden.

## Patentansprüche

1. Pneumatischer Stoßdämpfer, mit einem in einem Zylinder (11) verschiebbaren, eine aus diesem herausragende Kolbenstange (14) aufweisenden Kolben (10), mit einem einen Einlaß bildenden Rückschlagventil (25), über das ein durch den Kolben begrenzter Druckraum (12) im Zylinder (11) mit einer externen Druckquelle (P) verbunden ist, und mit einem einen Auslaß bildenden Auslaßkanal (35), wobei die externe Druckquelle (P) über einen Druckregler (83) mit dem Druckraum (12) verbunden ist, dadurch gekennzeichnet, daß ein die Bewegung und/oder Stellung des Kolbens (10) wenigstens im Bereich minimalen Druckraumvolumens erfassender Sensor (80) sowie ein auf den Druckregler (83) in Abhängigkeit des Sensorsignals einwirkender elektronischer Druckregelkreis (81, 82) vorgesehen ist und daß der Druckregelkreis eine elektronische Regelvorrichtung (81) aufweist, durch die der vom Druckregler (83) vorgegebene Druck beim Abprallen des Kolbens (10) von der bei minimalem Druckraumvolumen auftretenden zweiten Anschlagstellung (S2) erhöht und bei Nichterreichen derselben verringert wird.

2. Stoßdämpfer nach Anspruch 1, dadurch gekennzeichnet, daß der mit der Regelvorrichtung (81) verbundene Sensor (80) zur Erkennung des Erreichens der zweiten Anschlagstellung (S2) sowie wenigstens einer weiteren, vor dieser liegenden Stellung (S1) ausgebildet ist, wobei bei Nichterreichen beider Stellungen (S1, S2) eine größere Druckverringerung und bei Nichterreichen nur der zweiten Anschlagstellung (S2) eine kleinere Druckverringerung auslösbar ist.

3. Stoßdämpfer nach Anspruch 1 oder 2, dadurch gekennzeichnet, daß bei einer unter einem vorgebbaren Grenzwert liegenden Annäherungsgeschwindigkeit an die zweite Anschlagstellung (S2) der Druck durch den Druckregler (83) verringerbar ist und/oder daß bei einer über einem zweiten vorgebbaren Grenzwert liegenden Annäherungsgeschwindigkeit an die zweite Anschlagstellung der Druck durch den Druckregler (83) vergrößerbar ist.

4. Stoßdämpfer nach Anspruch 2 und 3, dadurch gekennzeichnet, daß bei jeweils einmaligem Erreichen der beiden Stellungen (S1, S2) und Unterschreitung des ersten vorgebbaren Grenzwerts oder Überschreitung des zweiten vorgebbaren Grenzwerts eine sehr kleine Druckveränderung auslösbar ist.

5. Stoßdämpfer nach Anspruch 3 oder 4, dadurch gekennzeichnet, daß zur Erfassung der Annäherungsgeschwindigkeit die Bewegungszeit (t) zwischen den beiden Stellungen (S1, S2) erfassbar ist.

6. Stoßdämpfer nach einem der Ansprüche 1 bis 3, dadurch gekennzeichnet, daß bei Überschreitung einer vorgebbaren Zahl von das Erreichen der zweiten Anschlagstellung (S2) kennzeichnenden Sensorsignalen eine Druckerhöhung auslösbar ist.

7. Stoßdämpfer nach einem der Ansprüche 1 bis 6, dadurch gekennzeichnet, daß beim einmaligen Erreichen der zweiten Anschlagstellung (S2) und wenigstens zweimaligen Erreichen einer weiteren, vor dieser liegenden Stellung (S1) eine Druckerhöhung auslösbar ist.

8. Stoßdämpfer nach Anspruch 6 und 7, dadurch gekennzeichnet, daß die Druckerhöhungen in diesen Fällen unterschiedlich abgestuft sind.

9. Stoßdämpfer nach einem der Ansprüche 1 bis 8, dadurch gekennzeichnet, daß durch den Sensor (80) oder einen weiteren Sensor eine die Dämpfungsbewegung des Kolbens (10) erfassende, außerhalb des Bereichs eines möglichen Zurückprallens des Kolbens von der zweiten Anschlagstellung (S2) liegende Stellung (S0) erfassbar ist.

10. Stoßdämpfer nach Anspruch 9, dadurch gekennzeichnet, daß die einmalige Auslösung eines dieser die Dämpfungsbewegung erfassenden Stellung (S0) entsprechenden Sensorsignals als notwendige Bedingung für einen Druckregelvorgang vorgesehen ist.

11. Stoßdämpfer nach einem der vorhergehenden Ansprüche, dadurch gekennzeichnet, daß im Auslaßkanal (35) ein bei einer Dämpfungsbewegung des Kolbens die komprimierte Luft auslassendes Auslaßventil (19) vorgesehen ist.

12. Stoßdämpfer nach einem der vorhergehenden Ansprüche, dadurch gekennzeichnet, daß im Auslaßkanal (35) eine Drossel (42) vorgesehen ist.

13. Stoßdämpfer nach Anspruch 12, dadurch gekennzeichnet, daß die Drossel (42) auswechselbar und/oder einstellbar ausgebildet ist.

## Claims

1. Pneumatic shock absorber with a piston (10) slideable in a cylinder (11) and a piston rod (14) extending out of the latter, with a non-return valve (25) forming an inlet, via which a pressure space (12) in the cylinder (11) which is bounded by the piston is connected to an external pressure source (P), and with an outlet duct (35) forming an outlet, wherein the external pressure source (P) is connected to the pressure space (P) via a pressure governor (83), characterized in that a sensor detecting the movement and/or position of the piston (10) at least in the range of minimum pressure space volume, together with an electronic pressure control circuit (81, 82) acting on the pressure governor (83) in accordance with the sensor signal, is provided, and that the pressure control circuit has an electronic control device (81) by means of which the pressure preset by the pressure governor (83) is increased when the piston (10) rebounds from the second stop position (S2) occurring at minimum pressure space volume, and is reduced when this is not reached.

2. Shock absorber according to claim 1, characterized in that the sensor (80) connected to the control device (81) is designed to detect the reaching of the second stop position (S2) together with at least one additional position (S1) lying before it, whereby a greater pressure reduction is triggered if both positions (S1, S2) are not reached, and a lesser pressure reduction is triggered if only the second stop position (2) is not reached.

3. Shock absorber according to claim 1 or 2, characterized in that, at an approach speed at the second stop position (S2) lying below a presettable limit value, the pressure is reducible by the pressure governor (83) and/or that, at an approach speed at the second stop position lying above a second presettable limit value, the pressure can be increased by the pressure governor (83).

4. Shock absorber according to claims 2 and 3, characterized in that, on reaching one of the two positions (S1, S2) and undershooting the first presettable limit value or exceeding the second presettable limit value, a very small pressure variation can be triggered.

5. Shock absorber according to claims 3 or 4, characterized in that, to determine the approach speed, the movement time (t) between the two positions (S1, S2) is detectable.

6. Shock absorber according to any of claims 1 to 3, characterized in that, when a presettable number of sensor signals indicating the reaching of the second stop position (S2) is exceeded, a pressure increase can be triggered.

7. Shock absorber according to any of claims 1 to 6, characterized in that, when the second stop position (S2) is reached once, and a further position (S1) lying before the former is reached at least twice, a pressure increase can be triggered.

8. Shock absorber according to claims 6 and 7, characterized in that the pressure increases in these cases are differently graduated.

9. Shock absorber according to any of claims 1 to 8, characterized in that, by means of the sensor (80) or an additional sensor, a position (S0) detecting the damping movement of the piston (10), lying outside the range of any possible rebound of the piston from the second stop position (S2), is detectable.

10. Shock absorber according to claim 9, characterized in that the single triggering of a sensor signal corresponding to this position (S0) detecting the damping movement is provided as a necessary condition for a pressure control process.

11. Shock absorber according to any of the preceding claims, characterized in that an outlet valve (19) which lets out the compressed air during a damping movement of the piston is provided in the outlet duct (35).

12. Shock absorber according to anyof the preceding claims, characterized in that a restrictor (42) is provided in the outlet duct (35).

13. Shock absorber according to claim 12, characterized in that the restrictor (42) is designed so as to be replaceable and/or settable.

## Revendications

1. Amortisseur pneumatique, comprenant un piston (10) coulissant dans un cylindre (11), présentant une tige de piston (14) sortant de celui-ci, comprenant une soupape anti-retour (25) formant une admission, par laquelle une chambre de pression (12) délimitée par le piston dans le cylindre (11) est reliée à une source de pression externe (P) , et comprenant un canal de sortie (35) formant une sortie, la source de pression externe (P) étant reliée à la chambre de pression (12) par l'intermédiaire d'un régulateur de pression (83), caractérisé en ce qu'un capteur (80) détectant le mouvement et/ou la position du piston (10) au moins au niveau du volume minimal de la chambre de pression, ainsi qu'un circuit électronique de régulation de pression (81, 82) agissant sur le régulateur de pression (83) en fonction du signal du capteur, sont prévus, et en ce que le circuit de régulation de pression présente un dispositif de régulation électronique (81) par lequel la pression imposée par le régulateur de pression (83) est augmentée en cas de rebond du piston (10) sur une deuxième position de butée (S2) apparaissant pour le volume minimal de la chambre de pression, et est réduite lorsque celle-ci n'est pas atteinte.

2. Amortisseur selon la revendication 1, caractérisé en ce que le capteur (80) relié au dispositif de régulation (81) est conformé pour détecter lorsque la deuxième position de butée (S2) est atteinte, de même qu'au moins une autre position (S1) située devant celle-ci, une réduction de pression plus grande étant déclenchée lorsqu'aucune des deux positions (S1, S2) n'est atteinte et une réduction de pression plus faible étant déclenchée lorsque seule la deuxième position de butée (S2) n'est pas atteinte.

3. Amortisseur selon la revendication 1 ou 2, caractérisé en ce que, lorsque la vitesse d'approche sur la deuxième position de butée (S2) est inférieure à un seuil prédéterminable, la pression peut être réduite par le régulateur de pression (83) et/ou en ce que, lorsque la vitesse d'approche sur la deuxième position de butée (S2) est supérieure à un deuxième seuil prédéterminable, la pression peut être augmentée par le régulateur de pression (83).

4. Amortisseur selon les revendications 2 et 3, caractérisé en ce qu'une très faible variation de pression est déclenchée lorsque les deux positions (S1, S2) sont atteintes chacune une fois et le premier seuil prédéterminable n'est pas atteint ou le deuxième seuil prédéterminable est dépassé.

5. Amortisseur selon la revendication 3 ou 4, caractérisé en ce que, pour détecter la vitesse d'approche, la durée de déplacement (t) entre les deux positions (S1, S2) est déterminée.

6. Amortisseur selon l'une des revendications 1 à 3, caractérisé en ce qu'une augmentation de pression est déclenchée lorsqu'un nombre prédéterminable de signaux de capteur caractérisant l'arrivée à la deuxième position de butée (S2) est dépassé.

7. Amortisseur selon l'une des revendications 1 à 6, caractérisé en ce que, lorsque la deuxième position de butée (S2) est atteinte une fois et une autre position (S1) située devant celle-ci est atteinte au moins deux fois, une augmentation de pression est déclenchée.

8. Amortisseur selon les revendications 6 et 7, caractérisé en ce que les augmentations de pression sont graduées de façon variable dans ces cas.

9. Amortisseur selon l'une des revendications 1 à 8, caractérisé en ce qu'une position (S0) détectant le mouvement d'amortissement du piston (10) et située hors de la zone de rebond possible du piston depuis la deuxième position de butée (S2) peut être détectée par le capteur (80) ou un autre capteur.

10. Amortisseur selon la revendication 9, caractérisé en ce que le déclenchement une fois d'un signal de capteur correspondant à cette position (S0) détectant le mouvement d'amortissement est prévu en tant que condition nécessaire à une phase de régulation de pression.

11. Amortisseur selon l'une des revendications précédentes, caractérisé en ce qu'une soupape de sortie (19) laissant sortir l'air comprimé lors d'un mouvement d'amortissement du piston est prévue sur le canal de sortie (35).

12. Amortisseur selon l'une des revendications précédentes, caractérisé en ce qu'un étranglement (42) est prévu sur le canal de sortie (35).

13. Amortisseur selon la revendication 12, caractérisé en ce que l'étranglement (42) est réalisé sous forme échangeable et/ou réglable.
